# EUROPEAN PATENT APPLICATION

(11) **EP 3 617 902 A1**
(43) Date of publication of application: **04.03.2020**
(21) Application number: 19203839.6
(22) Date of filing: 08.06.2011
(51) Int. Cl.: G06F 16/9537, G06F 16/958, H04W 4/021, H04W 4/18

(54) **METHOD AND APPARATUS FOR AGGREGATING AND LINKING PLACE DATA**

(30) Priority: 09.07.2010 US 83359810
(62) Divisional of application: 11803190.5
(71) Applicant: HERE Global B.V., 5611 ZT Eindhoven (NL)
(72) Inventor: SCHMIDT,, Andreas, 10961 Berlin (DE)
(74) Representative: Potter Clarkson

(57) **Abstract**

An approach is provided for aggregating and linking place data among entities via a collaborative registry. A place resource servicing application receives an input from a provider for specifying place information, the place information including, at least in part, a description of content available from the provider related to a place at a geographic location. The place resource servicing application determines the place from the place information. The place resource servicing application aggregates the place information with other place information available from one or more other providers in a registry based, at least in part, on the determined place.

## Description

### BACKGROUND

Service providers (e.g., wireless, cellular, Internet, content, social network, etc.) and device manufacturers are continually challenged to deliver value and convenience to consumers by, for example, providing compelling network services and advancing the underlying technologies. One area of interest has been in developing ways to aggregate place related information over the internet. For example, a place (e.g., a store, restaurant, hotel, etc.) is associated temporally and spatially with a geographic location (e.g., an address) and is often expressed according to a variety of non-standardized media formats. Accordingly, service providers and device manufacturers face significant technical challenges to enabling different data providers (e.g., providers of place data) to identify and link information related to a particular place that are available from different sources.

### SOME EXAMPLE EMBODIMENTS

Therefore, there is a need for an approach for aggregating and linking place data available from different sources or entities.

According to one embodiment, a method comprises receiving an input from a provider for specifying place information, the place information including, at least in part, a description of content available from the provider related to a place at a geographic location. The method also comprises determining the place from the place information. The method further comprises aggregating the place information with other place information available from one or more other providers in a registry based, at least in part, on the determined place.

According to another embodiment, an apparatus comprising at least one processor, and at least one memory including computer program code, the at least one memory and the computer program code configured to, with the at least one processor, cause, at least in part, the apparatus to receive an input from a provider for specifying place information, the place information including, at least in part, a description of content available from the provider related to a place at a geographic location. The apparatus is also caused to determine the place from the place information. The apparatus is further caused to aggregate the place information with other place information available from one or more other providers in a registry based, at least in part, on the determined place.

According to another embodiment, a computer-readable storage medium carrying one or more sequences of one or more instructions which, when executed by one or more processors, cause, at least in part, an apparatus to receive an input from a provider for specifying place information, the place information including, at least in part, a description of content available from the provider related to a place at a geographic location. The apparatus is also caused to determine the place from the place information. The apparatus is further caused to aggregate the place information with other place information available from one or more other providers in a registry based, at least in part, on the determined place.

According to another embodiment, an apparatus comprises means for receiving an input from a provider for specifying place information, the place information including, at least in part, a description of content available from the provider related to a place at a geographic location. The apparatus also comprises means for determining the place from the place information. The apparatus further comprises means for aggregating the place information with other place information available from one or more other providers in a registry based, at least in part, on the determined place.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings, in which:
FIG. 1 is a diagram of a system capable of aggregating and linking place data among entities via a collaborative registry, according to one embodiment;
FIG. 2 is a conceptual diagram of the system 100 of FIG. 1, according to one embodiment;
FIG. 3 is a diagram of the components of a place resource servicing application, according to one embodiment;
FIG. 4A is a flowchart of a process for aggregating and publishing place data among entities by a collaborative registry, according to one embodiment, FIG. 4B is a flowchart of a process continuing after a step of FIG. 4A, according to one embodiment;
FIG. 5A is a flowchart of a process for registering and/or linking place data by a service via a collaborative registry, according to one embodiment, FIG. 5B is a flowchart of a process continuing after FIG. 5A, according to one embodiment;
FIG. 6 is a flowchart of a process for updating place data of a web service via a collaborative registry, according to one embodiment;
FIG. 7 is diagram of utilizing the place publication processes of FIGs. 4A and 5A, according to one embodiment;
FIG. 8 is diagram of utilizing the application mashing up processes of FIGs. 4B and 5B, according to one embodiment;
FIG. 9 is diagram of an alternate version of the process of FIG. 8, according to one embodiment;
FIG. 10 is a diagram of hardware that can be used to implement an embodiment of the invention;
FIG. 11 is a diagram of a chip set that can be used to implement an embodiment of the invention; and
FIG. 12 is a diagram of a mobile terminal (e.g., handset) that can be used to implement an embodiment of the invention.

### DETAILED DESCRIPTION OF EXAMPLE EMBODIMENTS

Examples of a method, apparatus, and computer program for aggregating and linking place data among entities via a collaborative registry are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

As used herein, the term "place" refers to the semantics/usage of a location. Although a place is always associated with a physical location, it is an object independent of the location. That is, a place (such as a restaurant, department, etc.) might change its physical location (i.e. geographic coordinates) over time, and multiple places (such as a hotel and a restaurant) might be associated with the same location. Thus, a place is associated temporally and spatially with a geographic location. A particular place is distinguished from other places by a collection of values (place metadata) for a corresponding set of attributes (place metadata) that uniquely indicate the place. In addition to the place metadata (e.g., a name, location, category, contact, etc.) that uniquely indicates a particular place, there are place resources (e.g., pictures, maps, videos, personnel, products/services, menu of available products/services, amenities, etc.) that further describe the place. The place resources may be provided as one or more network resources, such as a collection of one or more files, directories, web pages, or a combination thereof, which are accessed by corresponding universal resource identifiers (URI), universal resource locators (URL), and/or other identifiers.

As used herein, the term "resource" refers to data or anything else capable of being defined in the semantic web for completing a project activity, such as people, equipment, facilities, funding, etc. Resource scheduling, availability and optimization are considered in data management. A resource can be a piece of data that a service provides to its users or enables its user to share. Familiar examples include an electronic document, an image, a service (e.g., "today's financial news on the Stock Exchange"), and a collection of other resources. It is noted that not all resources are network "retrievable", e.g., people, equipment, facilities, funding, bound books in a library, etc. For example, abstract concepts can be resources, such as the operators and operands of a mathematical equation, the types of a relation (e.g., "parent" or "employee"), or numeric values (e.g., zero, one, and infinity). Providing a concept is given an identity, either the concept is expressed by an information representation format (e.g., Resource Description Framework (RDF) triples) or structure (e.g., RDF graphs), or its identity is expressed by given a well-formed Uniform Resource Identifier (URL), then the concept can be a resource as well.

As used herein, the term "location-based service" (LBS) refers to an information service accessible through the network and utilizing the ability to make use of the geographical position of a terminal. LBS services can be used in a variety of contexts, such as navigation, entertainment, health, work, personal life, etc. Location-based services include services to identify a location of a person or object, such as discovering the nearest banking cash machine or the whereabouts of a friend or employee. Location-based services include location-based commerce (e.g., trade and repair, wholesale, financial, legal, personal services, business services, communications and media,), location-based ecommerce (e.g., online transactions, coupons, marketing, advertising, etc.), accommodation, real estate, renting, construction, dining, transport and travel, travel guides, mapping and navigation, parcel/vehicle tracking, personalized weather services, location-based games, etc.

Although several embodiments of the invention are discussed with respect to exchanging place metadata using extended markup language (XML) embedded in hypertext transfer protocol (HTTP) messages transmitted over a network between web services, one or more client applications, and a registry (including a permanent place ID service, a place metadata service, and a place resource service), embodiments of the invention are not limited to this context. It is explicitly anticipated that the metadata may be exchanged using any collection of attributes and values embedded in any network protocol or human interface between a web community member and one or more processes operating on one or more computing devices with or without a network.

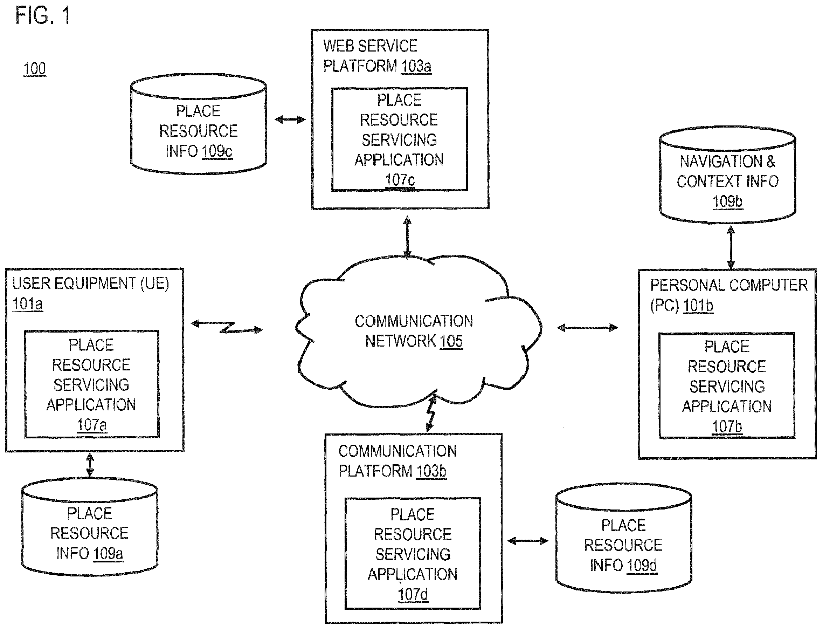

FIG. 1 is a diagram of a system capable of aggregating and linking place data among entities via a collaborative registry, according to one embodiment. Many entities (e.g., an individual, a business organization, a nonprofit organization, etc.) provide location based content, products, and/or services involving place-related resources (e.g. Business directories, geographic information systems, restaurant guides, hotel booking services, store coupons, etc.). Each of these entities manages its specific set of metadata for its places. Aggregation of metadata from various resources is a daunting task for many of these entities. To ensure data quality and integrity, every entity typically has to implement data validation, enrichment, and duplicate removal on its own (e.g., to identify entries that went out of business or moved to a different location). However, their metadata sets are not standardized which make it difficult to aggregate place metadata from different resources. There is a need for a system to easily check whether two sets of metadata from two entities refer to the same place, and to efficiently and effectively aggregate and link the place metadata among entities, while ensuring data quality and avoiding duplication.

Many websites, in particular search engines, use spidering as a means for providing up-to-date data (including place data). Some generic search engines use web crawlers to browse the World Wide Web in a methodical, automated manner or in an orderly fashion, to create a copy of all the visited pages and index the downloaded pages for fast searches. Crawlers are also used to gather specific types of information from web pages, such as location information. However, web crawling can not exactly identify the place that a given piece of information refers to, the automatic aggregation of location data contains duplications and/or conflicting information. Although various media formats contain mechanisms to add location related metadata to/inside the content, most of them don't enable identifying the place but just its location. By way of example, the crawlers do not distinguish an old address of a hotel and an existing address of the hotel such that both addresses are listed which cause confusion. Even if some services can distinguish places form the locations, they cannot identify the relation between a resource and a place (e.g. "a picture of the Eiffel Tower" vs. "a picture from the Eiffel Tower").

It is desirable to have such ability to identify a place beyond its location and to identify the relation between a resource and a place, for example, through appropriate metadata standards. However, the history of the semantic web initiative has shown that even if such standards exist, there is no mechanism that leads wide adoption of the metadata standards.

To address this problem, a system 100 of FIG. 1 introduces the capability to aggregate and/or link place data among entities via a collaborative registry. The system 100 follows a collaborative approach to build a web directory of place-related resources by owners of the resources. The resource owners publish at the collaborative registry their web resources, respective web links, and the relevant place metadata, so as to aggregate the data into a directory of place-related resources within the semantic cloud, in which grouping of place resources and the links to the place resources can be kept, organized, and updated. This registry registers and categorizes these links per place. This directory can be used by the entities to interlink their web pages. By way of example, a hotel/restaurant booking service links its web pages to an online travel guide for its corresponding hotel/restaurant reviews.

The system 100 defines standardized place metadata formats per place resource types (e.g. reviews, products, services, jobs, housing, etc.) to enable aggregating and linking place content across multiple entities. By way of example, the place content or its teaser can be displayed to users together with a link to the resource, based upon the place metadata (e.g., a name, location, category, contact, etc.). The place metadata standards can also be embedded in the place content.

The system 100 enables recourse owners to register their resources based upon the standardized place metadata formats (e.g., a place ID, description of the place, service, URLs, reviews, etc.), and to make the resources listed in the place resource registry (i.e., the collaborative registry) available for other resource owners and users to refer to. The system 100 also supports aggregating/linking place data with other place registry services based upon the standardized place metadata formats.

When a web service (including one or more websites) adapts the standardized place metadata formats, the system 100 can extract the place content directly from the websites based upon the standardized place metadata formats. When the same metadata mechanisms are also used by a search engine associated with the registry, a resource owner/publisher can easily find place content of interest via the registry and integrate the place content based upon the standardized place metadata formats. By way of example, the standardized place metadata formats include two different formats for the two relations between a resource (e.g., a picture) and a place (the Eiffel Tower), such that the two resources "a picture of the Eiffel Tower" and "a picture from the Eiffel Tower") are clearly distinguished to be aggregated and linked by entities accordingly.

The system 100 thus aggregates a massive place registry/directory continually expanded by providers by registering new places and/or update place content. The providers link/channel via registry/directory the place data and metadata among entities as well as among applications involving location-based resources. The place registry/directory makes its database available to other place directories, search engines, and entities involving place-related resources. A listing at the registry/directory results in a place automatically being listed and/or updated in many other directories, search engines, and entities involving place-related resources. The entities may offer one single webpage referring to a place of a sophisticated travel booking search engine involving places, hotels, flight tickets, car rental, etc. The approach of using providers to collaboratively maintain the place registry/directory is cost effective.

Having access to the system 100 further relieves entities from maintaining the core metadata (e.g., a name, location, etc.) of their places on their own. The system 100 assumes the responsibility of validating and enriching a place's core metadata, provides mechanisms to avoid duplicate creation and merge existing duplicates and enables entities to register their own resources and products/services related to a place in the publicly accessible directory. By enabling many providers to contribute to the same shared place resources, a single provider's efforts are leveraged to gain access to a much broader scope of place data than would not be possible to be built by one provider alone. All entities that provide resources (e.g., content, services, products, etc.) related to places can use the place ID to interconnect their resources.

As shown in FIG. 1, the system 100 comprises a user equipment (UE) 101a connected to a personal computer 101b, a web service platform 103a, and a communication platform 103b via a communication network 105. Each of the UE 101a, the personal computer 101b, the web service platform 103a and the communication platform 103b has a place resource servicing application 107 and a database 109 for storing information. The web service platform 103a and the communication platform 103b may provide services such as music service, mapping service, video service, social networking service, content broadcasting service, etc. In particular, UE 101a and the personal computer 101b respectively have databases 109a and 109b for storing place resource information. The web service platform 103a and the communication platform 103b respectively have databases 109c and 109d for place resource information.

The web service platform 103a registers/links place data with the registry a place resource servicing application 107c via the communication network 105, and the user equipment (UE) 101a retrieves place recourse information using a place resource servicing application 107a via the communication network 105. For the sake of simplicity, FIG. 1 depicts only a single UE 101a and a personal computer 101b in the system 100. However, it is contemplated that the system 100 may support any number of user terminals up to the maximum capacity of the communication network 105. For example, the network capacity may be determined based on available bandwidth, available connection points, and/or the like. As described previously with respect to the system 100, the place resource servicing application 107a uses the user context and preference information to automatically generate personalized presentations relevant to navigation POI to present at the UE 101. In the example of FIG. 1, armed with the place ID for a place, a provider can identify a particular place resource where information and service about that place are located on the network 105, such as by the URL for a webpage of links to descriptions and services for that place. Such a webpage can be accessed by the browser on the provider's node based on that URL in some embodiments. In other embodiments, separate place resources are not used.

By way of example, the communication network 105 of system 100 includes one or more networks such as a data network (not shown), a wireless network (not shown), a telephony network (not shown), or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (WiFi), wireless LAN (WLAN), Bluetooth®, Internet Protocol (IP) data casting, satellite, mobile ad-hoc network (MANET), and the like, or any combination thereof.

The UE 101a is any type of mobile terminal, fixed terminal, or portable terminal including a mobile handset, station, unit, device, multimedia computer, multimedia tablet, Internet node, communicator, desktop computer, laptop computer, notebook computer, netbook computer, tablet computer, Personal Digital Assistants (PDAs), audio/video player, digital camera/camcorder, positioning device, television receiver, radio broadcast receiver, electronic book device, game device, or any combination thereof, including the accessories and peripherals of these devices, or any combination thereof. It is also contemplated that the UE 101 can support any type of interface to the user (such as "wearable" circuitry, etc.).

By way of example, the UE 101, the place resource servicing application communicate with each other and other components of the communication network 105 using well known, new or still developing protocols. In this context, a protocol includes a set of rules defining how the network nodes within the communication network 105 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application headers (layer 5, layer 6 and layer 7) as defined by the OSI Reference Model.

In one embodiment, the place resource servicing application 107c of the UE 101a and the place resource servicing application 107c of the web service platform 103a may interact with each other according to a client-server model. According to the client-server model, a client process sends a message including a request to a server process, and the server process responds by providing a service (e.g., providing map information). The server process may also return a message with a response to the client process. Often the client process and server process execute on different computer devices, called hosts, and communicate via a network using one or more protocols for network communications. The term "server" is conventionally used to refer to the process that provides the service, or the host computer on which the process operates. Similarly, the term "client" is conventionally used to refer to the process that makes the request, or the host computer on which the process operates. As used herein, the terms "client" and "server" refer to the processes, rather than the host computers, unless otherwise clear from the context. In addition, the process performed by a server can be broken up to run as multiple processes on multiple hosts (sometimes called tiers) for reasons that include reliability, scalability, and redundancy, among others.

Although a particular set of nodes, processes, and data structures are shown in FIG. 1 for purposes of illustration, in various other embodiments more or fewer nodes, processes and data structures are involved. Furthermore, although processes and data structures are depicted as particular blocks in a particular arrangement for purposes of illustration, in other embodiments each process or data structure, or portions thereof, may be separated or combined or arranged in some other fashion.

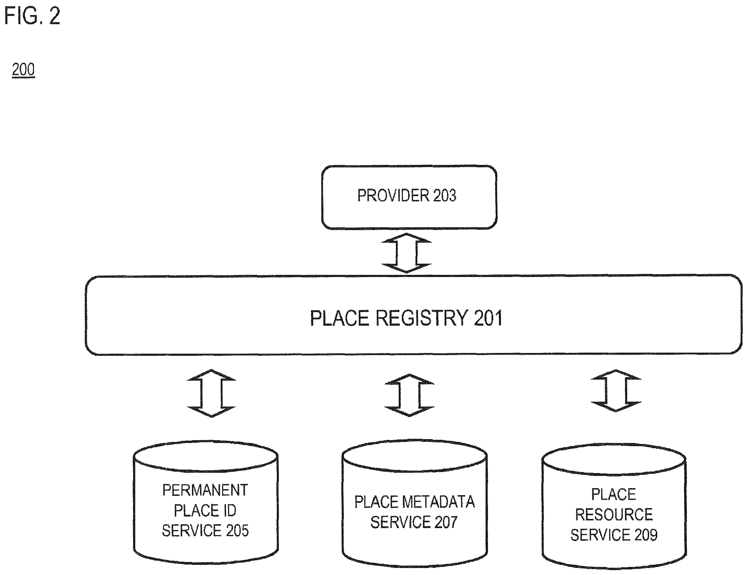

FIG. 2 is a conceptual diagram 200 of the system 100 of FIG. 1, according to one embodiment. In one embodiment, the system 100 deploys a place registry 201 that provides services related to integrating place data submitted by a provider 203 (e.g., a resource owner) based upon a permanent place ID service 205 creating and matching unique identifiers (IDs) for a place, a place metadata service 207 locating and storing a standardized set of core metadata associated with a place, and a place resource service 209, etc. In other embodiments, two or more of these services are combined into a single service that performs the steps of the combined processes.

The provider 203 can be any entity that publishes content and/or make a resource available through the place registry 201. The entity can be an individual, a business organization, a nonprofit organization, a legal entity, etc. The provider may provide a web service that publishes its web resources through the place resource service 209.

The place registry 201 provides a web resource directory that lists place-related web resources by place (e.g., a Pizza Restaurant in downtown New York City) for the providers to link resources to their own resources. The directory entries are entered by providers (e.g., resource owners), rather than by volunteer internet users or by web crawlers. In one embodiment, the place registry 201 exchanges messages with the providers 203 without a user interface. In another embodiment, the place registry 201 provides a user interface for an administrator of the provider 203 to register place data, etc. The place registry 201 is not a directory search engine (e.g., the Open Directory Project, Google Directory ®, etc), and does not display lists of web pages based on keywords for the general public.

The categorization of resources by place can be based on the whole web site rather than one page or a set of keywords, and the web sites are often limited to inclusion in only a few places. The place resource directory enables providers to directly register their resources for inclusion to one or more places, and the system 100 reviews submissions for fitness.

The place registry 201 contains a collection of known places and optional place content. A known place with respect to an provider is when the provider knows (e.g., has it the entity's database) at least the place's place ID (e.g., a commonly assigned place ID), and optionally the provider's private identifier for that place, and any corresponding content of the services, products, etc. related to that place. By enabling a provider to publish its private identifier for a place, the place registry 201 can provide cross-reference-mappings between itself and other reference systems that also maintain place information (e.g., WhereOnEarth®).

When a provider sends a registration message to register a place with the place registry 201, the message must include enough information (e.g., a name of the place, metadata of the place, etc.) to determine a degree of match with predetermined places in a metadata data structure. The place registration message may be an XML document in the body of an HTTP POST message.

The place registry 201 keeps the collection of known places up to date via collaborative efforts of the providers. The more providers claim to know a place the more likely that the place really exists and the more likely that the data all the providers agree upon is correct. Meanwhile, the more providers delist a place from their lists of know places, the more likely that the place is no longer exist (e.g., moved to a different location, changed ownership, renamed, closed for the season, closed permanently, etc.).

The permanent place ID service (PPIDS) 205 provides identification for every place on earth by exposing one identifier for every known place, based on a set of place related attributes called base attributes (e.g. A name, address, and category). A provider sends a place registration message (e.g., in HTTP) to the place registry 201 to register a new place.

The PPIDS 205 determines whether the place registration message is valid, e.g., based on an objective mapping source, e.g., the commercial location reference object (LRO) digital map service of NAVTEQ®. By way of example, the LRO service indicates if a given street name does exist in a given city or within a given postal code, or whether a given house number does exist for the given street name. In other embodiments, the PPIDS 205 also determines and corrects the place registration metadata, such as for misspellings, transposed numeral and missing postal codes or cities, to produce valid, corrected place registration metadata.

The PPIDS 205 avoids creating duplicate places (creating multiple place IDs for the same physical place) by using matching logic, by comparing the metadata attributes of a place and merging place IDs referring to the same place. The PPIDS 205 checks place metadata validity and avoids duplication by recognizing when place metadata for a new place resource closely matches place metadata for an existing place resource. By way of example, the PPIDS 205 implements a fuzzy logic matching algorithm that matches places even if the metadata of the known places do not exactly match with the place registration metadata. The fuzzy logic matching algorithm may contain various components including location identification, category definition, name resolution, vicinity detection, and previous selection tracking as described in US Patent Application No. 12/478,484, the entire contents of which are hereby incorporated by reference. Thus, the PPIDS 205 implements some vicinity search that checks for matches with places that are located near the provided address or geo-location coordinates. The PPIDS 205 then calculates a "quality-of-match" value, or a degree of match value, that gives some sense about how close the data of each returned place is to the registration metadata from the provider. The PPIDS 205 returns data identifying a list of one or more candidate places that demonstrate a degree of match value above a predetermined threshold.

Thereafter, the provider receives a list of candidates. If the provider doesn't agree with any of the candidates, the provider has to correct the metadata manually and returns to the registration with the new metadata.

Otherwise, the provider selects one of the candidates, and sends back to the registry 201 the selection in a message. Based on the selected candidate, the PPIDS 205 constructs the candidate metadata from the registration metadata according to standardized place metadata formats per place resource types. The PPIDS 205 sends the place registration metadata to the place metadata service (PMDS) 207 in an update place message to update the metadata of the selected place based on the place registration metadata. The PMDS 207 updates the selected place and sends the place ID of the updated but extant place in a message. The place ID may have changed if the original partial matched place was merged with another place as a result of the updates. The PPIDS 205 returns in a message the place ID of the extant place.

Based on the selected candidate, the PPIDS 205 also learns which metadata were used to identify a place and automatically creates some additional matching metrics and/or heuristics to score the differences between the selected candidate and other candidates. In one embodiment, these metric may be applied to future place registration efforts by the same provider or future place registration efforts by other providers. The PPIDS 205 enables registering places and returns the identifier of that place.

The PPIDS 205 builds the foundation of the place registry 201. It provides a unique identifier to every place provided (registered) by a user. During that registration process, the PPIDS 205 validates, standardizes, enhances the attributes provided and duplicates them against previously registered places. Knowing a place's unique identifier enables every user to lookup all published URI for that place without, for instance, further specifying characteristics of the place (e.g., location, type, etc.). The URIs can then be used to build a mash up of information related to that place.

The place metadata service (PMDS) 207 enables lookup and maintenance of the base attributes of a place through its unique identifier. In one embodiment, PMDS 207 follows a wiki approach, enabling multiple providers to collaborate on keeping the status and base attributes of a place up to date. The PMDS 207 binds web resources (as URLs) to a place. A global place name service (GPNS) may be included in the PMDS 207 to register a globally unique name, called a place ID, for a place. In another embodiment, the function of the GPNS is included in the PPIDS 205. A provider can send to the PMDS 207 a message for requesting a place resource (e.g., a HTTP GET message). This request includes at least a place ID. In addition, the provider can read and manage metadata of the place via PMDS 207.

By way of example, a place metadata entry includes a place ID field, a place URL field, merged place IDs field, place category field (e.g., bar, restaurant, etc.), place name field, place location field and place contact field, etc. These fields can be arranged in different orders in conjunction with additional fields. The place ID field holds data (e.g., URI) that indicates the unique identifier for a particular place. The place URL field holds data that indicates a primary place resource (e.g., a web page hosted by the provider that registered the place and named using the place ID) on the network for obtaining information and /products/services, etc. related to the place. Links to multiple other resources, if any, related to that place can be found at the primary place resource. A place remains accessible by any ID that was once assigned to that place. The providers are free to assign their own categories through tags to a place. The categories may include Administrative region, locality, transportation network, building, landmark, government facility, transportation facility, religious facility, sports facility, educational facility, arts and entertainment, healthcare, accommodation, dining, going out, trade and repair, wholesale, construction, financial, legal, personal services, business services, communications and media, travel services, real estate, renting, etc.

In some embodiments, place resources for a single place are provided as one or more network resources, such as a collection of one or more files or directories or web pages, which is accessed by corresponding universal resource identifiers (URIs). A domain name server (DNS) on a network resolves URL names into Internet Protocol (IP) addresses that are used to route messages sent across an IP network, as is well known in the art. Thus a user of a web browser can access those place resources, once given the URIs. In some embodiments, the place resources are not maintained separately from a central database of place metadata.

Via the PMDS 207, a provider can retrieve the metadata associated with a place ID or find a place ID for a place with metadata that exactly or partially matches the metadata on hand. According to some embodiments, the processes executed by the PMDS 207 are utilized by the PPIDS 205 to quality control metadata registered with the place registry 201 and substantially reduce duplicate entries. To prevent malicious creation of new entries, messages to create a new place or update an entry are accepted only from trusted sources, like the PPIDS 205.

The place resource service (PRS) 209 enables lookup in and maintenance of the directory of place-related resources. In concert, the services provide for collaborative management of location based information. The PRS 209 enables the providers 203 to publish their own web resources related to a place. In this context, a resource may be any information that can be referenced via a URI. The PRS 209 enables the providers 203 to describe their web resources by publishing additional metadata along with the URI.

For each provider, the PRS 209 implicitly creates a "default operation/service" that is equally named as the provider. As mentioned, a provider publishes content in the PRS 209 through a client application. By way of example, the content that is intended to be published can be any web resource with a URI. The PRS 209 enables publishing content in contexts of the provider's business. There may be 1:1 or n:1 relation between a provider and a client application that connects the provider to the PRS 209. There may be 1:1 or 1:n relations between a provider and a business run by the provider that publishes its web resources in the PRS 209. As providers might run multiple operations (including not-for-profit ones) and/or businesses (e.g., involving different products and/or services, etc.) at the same time, they may also publish contents for different operations and/or businesses in the place registry 201. For each operation/business, the PRS 209 provides a collection of places known to that operation/business. For each product/service, the PRS 209 may provide a refined collection of places known to that product/service. The provider can manually manage one or more of the collections. The other components of the place registry 201 may also implicitly modify the one or more collections. For example, whenever a provider registers a place in the place registry 201, the system 100 ensures that this place is listed in the one or more collections of known places of the provider's default operation/business. For every known place of an operation/business, the corresponding provider can publish and manage an arbitrary number of content items. In addition to each content item's URI, the provider may also publish some metadata to describe the content item. A client application that connects to the PRS 209 can access the PRS 209 to read the one or more collections of all content items published by any provider for a given place.

In one embodiment, the PPIDS 205, the PMDS 207 and the PRS 209 are web services that provide an HTTP based application programming interface (API) that follows the design principles for RESTful web services. In other embodiments, such services are accessed by a browser with a human operator providing manual input required by the API. Such a browser or a JavaScript based browser extension may directly support the HTTP-PUT operation or directly create XML messages. Alternatively, a special place building client application, e.g., a place registry client, automatically provides some or all of the input required by the API using one or more HTTP messages. The place registry 201 includes centralized services invoked by a community of providers distributed across network 105, such as an operator of the UE 101s or the web service platform 103a. The number of places may be managed by a single host or multiple hosts across the network 105 each responsible for a specific area or region (e.g., of the world, a particular country, or other geographic boundary).

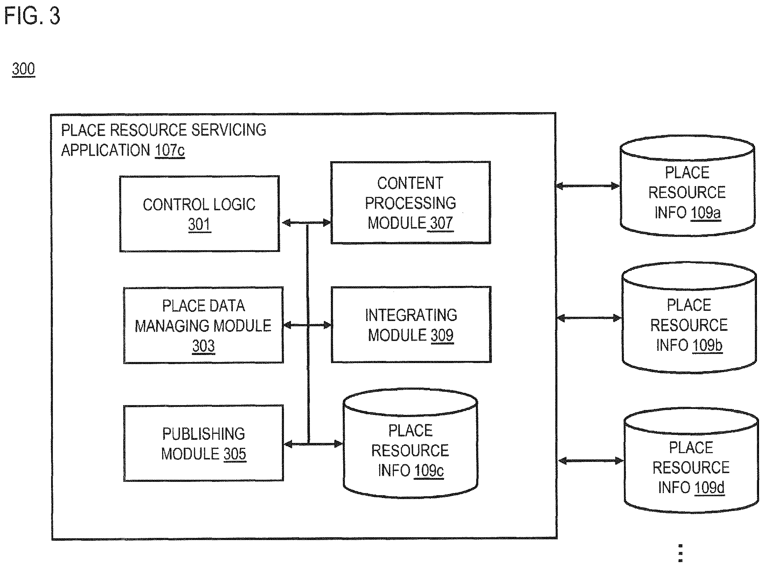

FIG. 3 is a diagram 300 of the components of a place resource servicing application, according to one embodiment. By way of example, the place resource servicing application 107c of the web service platform 103a includes one or more components for aggregating and linking place data among entities via a collaborative registry. It is contemplated that the functions of these components may be combined in one or more components or performed by other components of equivalent functionality. In this embodiment, the place resource servicing application 107c includes at least a control logic 301 which executes at least one algorithm for performing functions of the place resource servicing application 107c. For example, the control logic 301 interacts with a place data managing module 303 to add a known place in and/or remove the known place from a collection of known places in the place registry 201.

There are at least three mechanisms for adding a place in the collection of known places. In one embodiment, the place data managing module 303 automatically adds a place through the PPIDS 205 into the default operation/business of a provider, when the provider registers the place. In another embodiment, the place data managing module 303 automatically adds a place through the place metadata service 207 into the default operation/business of the provider, when the provider modifies the place. In yet another embodiment, the provider manually adds a place. Manual addition may be used when the provider receives its places through some other channels. Manual addition is also be used when the provider wants to publish its private identifier for each automatic created known place, since the two automatic addition mechanisms cannot speculate an operation/business's private identifier for a place. In another embodiment, a private place ID is directly added into a PPIDS-registration request to associate the private ID with a known place in the registry 201. In another embodiment, manual addition may be used when a provider maintains multiple operations/businesses in the resource registry 201, when automatic addition mechanisms only operate on one default operation/business.

The place data managing module 303 also removes a single place from an operation/business' known places. In one embodiment, removing a place from the collection of known places can be performed by inserting or otherwise publishing the semantic of "this operation/business has no knowledge/content on this place anymore." This operation is different from an operation of "marking a place as removed" by the place metadata service 207. "Marking a place as removed" indicates that the provider knows that the place no longer exists.

In another embodiment, removing a known place triggers removing all references to content published for that operation/business in the place resource service 209. In yet another embodiment, when a provider removes a place from its default operation/business, the place is removed from all other operations/businesses of the same provider. Removing a place from the collection of known places of any other businesses of the provider has no side effect on the other operations/businesses.

The place data managing module 303 also implements bulk maintenance of known places for the provider 203. In one sample use case, place data integration is implemented based of a dump/backup of the latest set of all places of the Lonely Planet® which publishes travel guide books and digital media. For example, the company provides websites, blogs, social network content, reviews, trip planning tools, travelling tips and advices, etc. for travelers. For each country, region, city, or point of interest, the travel guides need to be updates for content including when and where to go, costs and money, history, arts, architecture, environment and planning, government and politics, media, internet resources, neighborhoods, food and restaurants, entertainment (dance, opera, bars, etc.), sports & activities, hotels & lodging, excursions, transportation, etc.

In one embodiment, a travelling web content management system is directly connected and/or integrated with the place registry 201. Whenever the web content management system creates a new place, the place data managing module 303 automatically registers the new place with the permanent place ID service 205. In addition, the place data managing module 303 sends update to the place metadata service 207, whenever the web content management system removes a place by marking the place as nonexistent or removing the place from the company's collection of know places.

In another embodiment, the paper publication content archive of a provider may not have a complete set of resource metadata for the place registry 201. For example, its place dump/backup does not contain any place IDs, doesn't contain any status information on a place between two dumps (e.g., "new", "updated", "untouched"), and/or provides no information on places that had been remove since the previous dump. The place registry 201 can still support the management of the collection of known places of such a paper publication content achieve.

Under the paper publication scenario, the place data managing module 303 provides a simple mechanism for marking known places of the archive, defining operations that mark/unmark a place and enabling removing all marked places from the collection of known places in the achieve. In one embodiment, the bulk maintenance is implemented as follows. Prior to processing a new place dump, the company creates a new marker to be marked on each place in the collection of known places of the archive. The company then simply re-registers all places contained in the latest dump against the IDs through the permanent place ID service 205 and/or updates the attributes of the places through the place metadata service 207. For all registered/modified places, the permanent place ID service 205 and the place metadata service 207 will implicitly remove all markers from these places in all collections of known places in all operations/businesses of the company. Once all places in the dump are processed, only those places that are still marked are those no longer contained in the latest dump. The company can then remove all the still marked places from the collection of known places with a single operation.

The control logic 301 also interacts with a publishing module 305 to support a provider to publish contents in the context of the place that the content relates to. Content can be anything that can be referenced through a uniform resource identifier (URI). The provider publishes content to invite other providers to link to the provider's businesses/websites. The provider also publishes resource metadata along with the URI to enable another client application of another provider that connects to the place resource service 209 to decide whether to connect to the content. The resource metadata may include attributes defined in Table 1.

**Table 1**

| | |
|---|---|
| Title: | A title that is used within links to the content, e.g., "travelling guides", etc. |
| Content-Type: | A mime-type/internet media type that defines the type of media of the content, e.g., application, text, audio, image, multipart, message, etc. |
| Media Type: | A descriptor of target devices for which the resource is applicable, e.g., computers, mobile phones, etc. |
| Content-Language: | The (natural) language(s) of the expended audience of the content). For example, RFC 5646 defines various content language types. |
| Relation-Type: | A descriptor of the relation between the place and the content. For example, RFC-nottingham-http-link-header-10 lists license, service, payment, etc. |
| Resource-Type: | A descriptor of the semantic of the content, e.g., a review, product description, booking service, etc. |
| Description: | Additional information about the resource |

The control logic 301 also interacts with a content processing module 307 to represent collections of content items defined as in Table 1, for example, as an Atom feed as specified in Table 2, for providing users with content syndicated/aggregated by the registry 201 as subscribed by the users. In one embodiment, the established ATOM feed format is reused to publish all resources known to a place.

By way of example, Atom is an XML-based document format that describes lists of related information known as "feeds". The Atom feeds involve to two related standards. The Atom Syndication Format is an XML language used for web feeds, and the Atom Publishing Protocol (AtomPub) is a simple HTTP-based protocol for creating and updating web resources. Feeds are composed of a number of items, known as "entries", each with an extensible set of attached metadata.

In one embodiment, for every entry in a service's collection of known places, the registry 201 provides an Atom feed for the web service run by the provider. With its own Atom feed, the web service can manage its content via a client application running on the provider's own server(s). With the Atom feeds of other web services that it has subscribed, the web service of the provider can check for updates of the other web services that have been published at the registry 201. In one embodiment, each entry has a title, a content-type, a media type, a content-language, a relation-type, a resource type, and a description as shown in Table 2. In another embodiment, an entry contains headlines, full-text articles, excerpts, summaries, links to content on a website, various metadata, or a combination thereof.

When instructed, the client application asks all or a portion of the servers in its feed list if they have new content; if so, the client application either makes a note of the new content or downloads it. The registry 201 periodically checks with the client appellation for new content. Atom feeds are an example of pull technology (i.e., client pull, where the initial request for data originates from the client, and then is responded to by the registry 201), although they may appear to push content from the registry 201 to the web service run by the provider 203.

**Table 2**

| |
|---|
| Title: Plain Text / (x)Html |
| Content-Type: RFC... |
| Media Type: CSS2 media types |
| Content-Language: RFC... |
| Relation-Type: IANA + URI, spec! |
| Resource Type: Microformat Profile URI, RDFa... |
| Description: Usually textual description in pure text or (x)HTML. It might also contain additional metadata as specified in the corresponding resource type standard. |

In another embodiment, the content processing module 307 also provides an Atom feed for every entry in a service/business' collection of know places, where the service can manage its content through the ATOM-PUB protocol. The atom publishing protocol (AtomPub) is an application-level protocol for publishing and editing web resources. The protocol is based on HTTP transfer of Atom-formatted representations. The atom publishing protocol only covers the creating, editing, and deleting of entries and media resources. The Atom format is documented in the atom syndication format.

The content processing module 307 also provides a mechanism that implements implicit content publishing. A business/service that has the same type of content for all places (e.g., restaurants) in its collection of known places, may use the implicit content publishing feature of the place resource service 209. The service provides the metadata attributes of its resources along with a URL template (e.g., michelinguide.com/newyork/restaruant/YYY). This URL template may contain variables for the place ID and/or the business's identifier, which is automatically replaced with the place's specific values by the place resource service 209, when the content items are published in the feed of aggregated contents of a place.

The content processing module 307 also provides a mechanism that enables a client application of a provider to access the content items. For every place known to the place registry 201, the place resource service 209 provides an Atom feed, where the client application that connects to the PRS 209 can access all contents aggregated from all operations/businesses for that place. The feed provides various language and content negotiation features to filter contents appropriate for a specific usage.

The content processing module 307 further provides a mechanism that enables providers to control the access scope/level which other client applications that connects to the place resource service 209 are enabled to see their published resources, i.e., subscribing to certain Atom feeds. The system 100 is built as a collaboration platform such that the place resource service 209 has full access to all content items submitted by the providers. Nevertheless, each provider is enabled to set its own access policy for other providers (e.g., clients, partners, competitor, etc.) for commercial reasons (e.g., commercial secrets, contractual relations, client lists, competitive edges, etc.) or non-commercial reasons (e.g., national security, politic champion, scholarship competition, etc.). Having the ability to limit access enable a provider to use the place resource service 209 for public publishing and content syndication. On the other hand, some existing base data repository sets "private" and "public" accesses to published content with respect only to the repository, not other providers.

The content processing module 307 also provides a mechanism that enables the providers to extract content items configured according to the standardized metadata formats. By using the standardized metadata format types and embedding the appropriate attribution in the content items, a client application of one provider enables other client applications of other providers that connect to the place resource service 209 to extract the information from the content items and then use the extract content along with the link to the resource in the other client application's environment. Meanwhile, the client application of one provider can directly extracts content from the resources of other providers if they are configured according to the standardized metadata formats. In other words, the place resource service 209 provides the technical infrastructure of the standardized metadata formats for such an exchange. It is up to the individual client applications to agree on the appropriate rights of use on the others' content.

The control logic 301 also interacts with an integrating module 309 to integrate web services (e.g., location-based services) with the place resource service 209. The integrating module 309 facilitates linking between an external resource (e.g., a website) and a provider's resource (e.g., a service website, an application, etc) through the place registry 201. By way of example, an external (mobile) website (e.g. A hotel booking service) wants to be linked from a location-based service (e.g., mapping, navigation, travel guide, etc.). The hotel booking service provider registers all its hotels in the place registry 201 and then publishes the URL of each hotel's booking page in the place resource service 209. When the web mapping service connected to the place resource service 209 searches for one of these hotels, the search result contains a link to the booking page of the searched hotel.

For a developer of an application (e.g., a web mapping application) that refers to places and is available at an online application store, the integrating module 309 facilitates the manual publication of the place data and links to the portions of the application that include the places with the registry 201. If another provider looks up a place at the registry 201 that is included in the web mapping application, the integrating module 309 checks if the corresponding web-mapping application is already installed on the requesting device (e.g., a mobile phone, etc.) of the other provider. If not, the integrating module 309 creates a link from the device to the online application store, so that the user of the device can obtain a copy of the web mapping application from the online application store. When the web mapping application is already installed on the requesting device, the integrating module 309 creates a hyperlink of the searched place from the requesting device to the web mapping application. A hyperlink from a popular website (e.g., Lonely Planet) to the web mapping application (e.g., the local city guide) increases its discoverability.

In another embodiment, when a web mapping application A is built with a special software development kit (SDK) that uses web technologies but makes the application resides only on a device installed with the application and cannot be linked via a regular hyperlink. To make the web mapping application "linked" by another web mapping application B of the same nature, each of the web mapping application A, B is defined with its own "domain," and the SDK provides mechanism for "deep links" between the two domains.

The developer of the application A that refers to places manually publishes with the registry 201 the place data and deep links to the portions of the application that include the places. If a user of the application B looks up a place at the registry 201 that is included in the application B, the integrating module 309 checks if the application A is already installed on the requesting device. If not, the integrating module 309 creates a link from the device to the online application store, so that the user of the device can obtain a copy of the application A from the online application store. When the application A is already installed on the requesting device, the integrating module 309 creates a deep link of the searched place from the requesting device to the application A. The deep link allows jumping off the application B to a URI within the application A. Therefore, the application gains "discoverability" via the application B.

The integrating module 309 also facilitates the location-based service application A to implicitly publish all the embedded content items in its website. The package format of the location-based service application A enables attaching metadata that contains a list of places and their resources of the application A. As part of the intake process of the online application store, the metadata is used to register all the places along with their resources and the application A's link in the online application store. In other words, integrating module 309 automatically updates the directory based upon the metadata applicable to the location-based application that is built with the special SDK. In this case, the SDK implicitly creates the resource metadata, so that the developer does not have to, and all the handling with the registry 201 can be done by the online application store.

The integrating module 309 also facilitates a location-based service application built on the top of the place registry 201 to market its service(s). For example, a location-based service application C, that offer content/features for specific regions (e.g., the New York City) but not individual places (e.g., Italian restaurants), can publish a link to a location-based service application D available at the online application store as a product resource for their region's places. This can happen implicitly based on some metadata of the location-based service applications as part of the intake process in the online information store.

The integrating module 309 facilitates an application built on the top of the place registry 201 to advertise its products/services (e.g., ice cream chain stores). Merchants (or their advertisers) can publish product/service resources to all store places where consumers can buy their goods/services.

The integrating module 309 facilitates an application built on the top of the place registry 201 to aggregate content items. For specific resource types (e.g., reviews, products, etc.), a location-based service application may want to aggregate multiple of these resources in one resource-type window and order content items across multiple resources based on one or more criteria. Within this window, some teaser content of the resources, that can be extracted based on the resource type specification, can be displayed to the client applications that connect to place resource service 209. By way of example, a teaser may be the leading paragraph of an article, advertisement that attracts audience, an attention-getting summary or highlight of a resource, or a combination thereof.

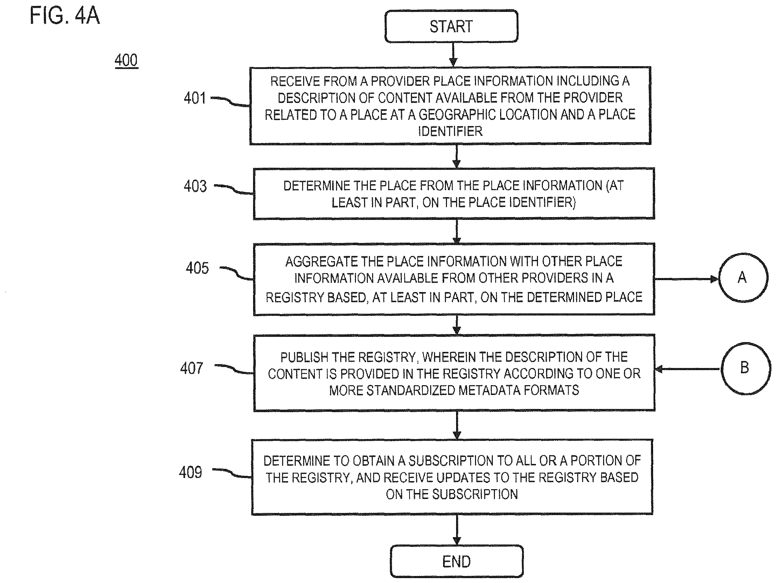

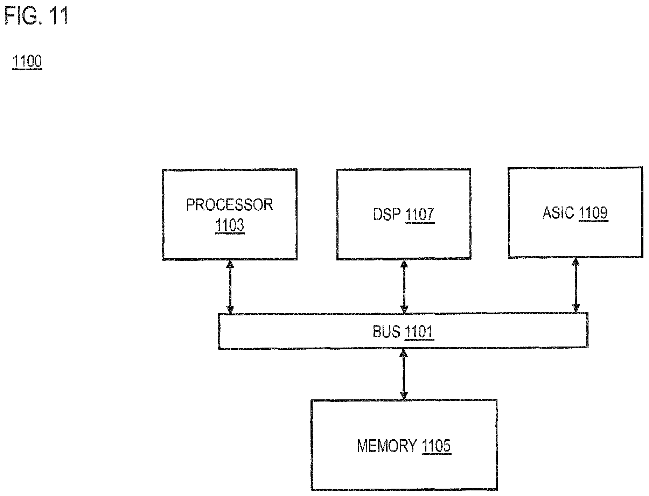

FIG. 4A is a flowchart of a process for aggregating and publishing place data among entities by a collaborative registry, according to one embodiment. In one embodiment, the place resource servicing application 107c of the place registry 201 performs the process 400 and is implemented in, for instance, a chip set including a processor and a memory as shown in FIG. 11. In step 401, the place resource servicing application 107c receives an input from a provider for specifying place information, the place information including, at least in part, a description of content available from the provider related to a place (e.g., a hotel, etc.) at a geographic location (e.g., an address, etc.), the place information further includes a place identifier of the place. In one embodiment, the place identifier is globally unique within the registry. This unique identifier enables aggregating the place information without confusion of a place referred by different providers under different private IDs or by no IDs at all. By way of example, the collection of museums in downtown Washington, DC is generally referred as "the Mall." Some people and local newspapers refer it as "the Museum Mall" to distinguish form a regular shopping mall. To avoid confusion and duplication of IDs, the system assigns a place ID to "the Mall." The place ID can be numerical or alphabetical, as long as its length is sufficient to make each ID within the registry unique. In another embodiment, the place identifier is worldwide unique. In other words, the place ID is universally identifiable and is not duplicated in any name and/or ID domains.

The place resource servicing application 107c determines the place from the place information (based, at least in part, on the place identifier) (Step 403). The place resource servicing application 107c aggregates the place information with other place information available from one or more other providers in a registry based, at least in part, on the determined place (Step 405).

The place resource servicing application 107c determines to publish the registry. The description of the content is provided in the registry according to one or more standardized metadata formats (Step 407).

The place resource servicing application 107c determines to obtain a subscription to all or a portion of the registry, and receives one or more updates to the registry based, at least in part, on the subscription (Step 409). The subscription may be defined with one or more place identifiers, and the subscription may includes content metadata correspond to the one or more place identifiers. The publication and the subscription can be transmitted via web feeds.

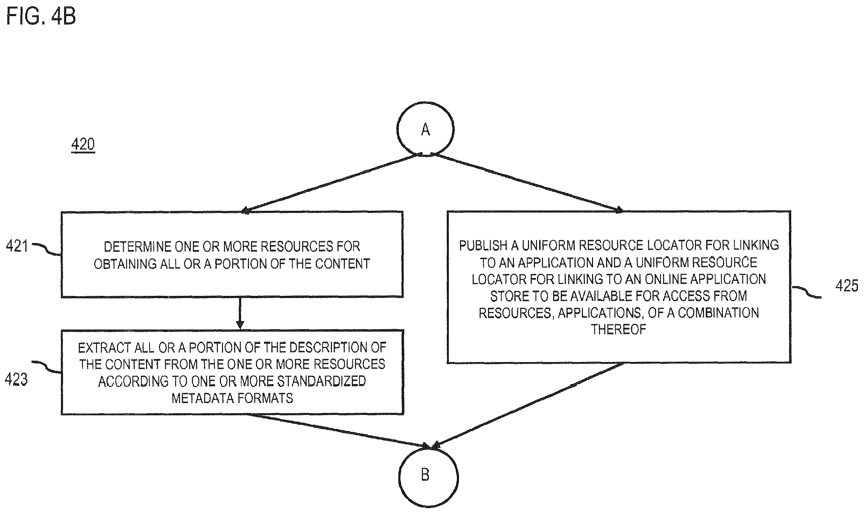

FIG. 4B is a flowchart of a process 420 continuing after the step 405 of FIG. 4A, according to one embodiment. In one embodiment, the place resource servicing application 107c of the place registry 201 performs the process 420 and is implemented in, for instance, a chip set including a processor and a memory as shown in FIG. 11. In step 421, the place resource servicing application 107c determines one or more resources for obtaining all or a portion of the content. Each resource (e.g., a photo, media file, website, database, etc.) is identified by one of the one or more resource identifiers and is related to a place that is associated with a geographic location, and the corresponding resource metadata have standardized metadata formats per resource type.

The place resource servicing application 107c determines to extract all or a portion of the description of the content from the one or more resources according to one or more standardized metadata formats (Step 423). The description of content includes content metadata (e.g., a name, address, content type, place, location, category, contact, etc.), and the content metadata is standardized in one or more formats. The content metadata also includes a content identifier, and the content identifier may be associated with a uniform resource locator for other providers to link one or more resources, applications, or a combination thereof to the content. The applications are those used by the providers to provide services referring to the places, the content, teasers of the content, etc. Thereafter, the place resource servicing application 107c continues back to Step 407 and determines to publish the registry.

In another embodiment, a uniform resource locator for linking to an application and a uniform resource locator for linking to an online application store that carries the application. The place resource servicing application 107c determines to publish the uniform resource locator for linking to an application and the uniform resource locator for linking to an online application store to be available for access from one or more resources, applications, of a combination thereof. Thereafter, the place resource servicing application 107c continues back to Step 407 and determines to publish the registry.

In another embodiment, a resource identified by the resource identifier can be an existing application referring to a place. The place resource servicing application 107c receives a link from the existing application to another/new application referring to the place, and an identifier of the other application. The place resource servicing application 107c determines to register the link and the identifier of the other application to be available for access. The place resource servicing application 107c, in response to a query from the application for a place referred in the other application, determines to transmit the application a resource identifier of the other application and the link to the online application store.

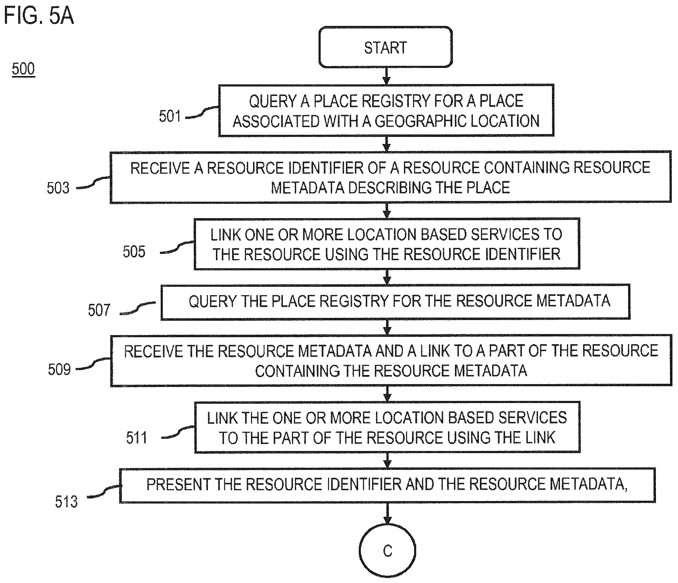

FIG. 5A is a flowchart of a process for registering and/or linking place data by a service via a collaborative registry, according to one embodiment. In one embodiment, the place resource servicing application 107c of the service (e.g., a location based service) performs the process 500 and is implemented in, for instance, a chip set including a processor and a memory as shown in FIG. 11. In another embodiment, the process 500 is implemented via the place resource servicing application 107a, when the service provider (e.g., an individual offering a simple location-based service) is operating via the UE 101a.

In step 501, the place resource servicing application 107c queries a place registry for a place associated with a geographic location. The place resource servicing application 107c receives at least a resource identifier of a resource containing resource metadata describing the place (Step 503). The place resource servicing application 107c links one or more web services involving place-related resources to the resource using the resource identifier (Step 505). The place resource servicing application 107c queries the place registry for the resource metadata (Step 507). The place resource servicing application 107c receives the resource metadata and a link to a part of the resource containing the resource metadata (Step 509). The place resource servicing application 107c links the one or more web services to the part of the resource using the link (Step 511). The place resource servicing application 107c determines to render presentation of the resource identifier and the resource metadata, the resource metadata including a name of the place, an address of the place, contact information of the place, a rating of the place, a review teaser of the place, or a combination thereof (Step 513).

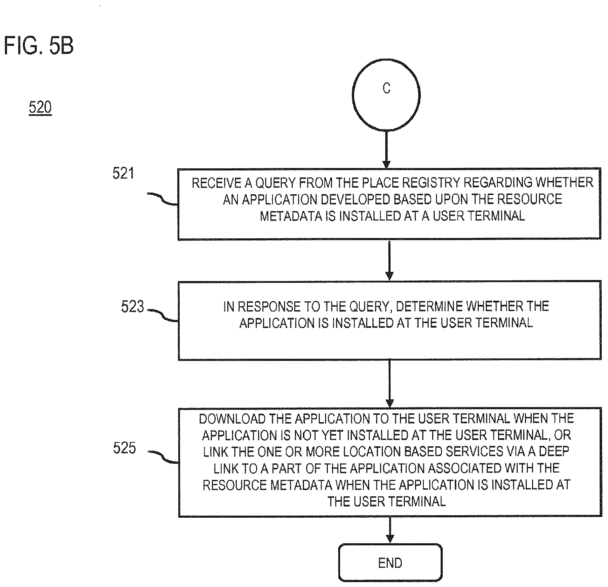

FIG. 5B is a flowchart of a process 520 continuing after FIG. 5A, according to one embodiment. In one embodiment, the place resource servicing application 107c of the location based service performs the process 520 and is implemented in, for instance, a chip set including a processor and a memory as shown in FIG. 11. In step 521, the place resource servicing application 107c, in response to the query for the resource metadata, further receives a query from the place registry regarding whether an application developed based upon the resource metadata is installed at a user terminal accessing the one or more web services for the place. The place resource servicing application 107c, in response to the query from the place registry, determines whether the application is installed at the user terminal (Step 523). The place resource servicing application 107c determines to download the application to the user terminal when the application is determined as not yet installed at the user terminal, or linking the one or more web services via a deep link to a part of the application associated with the resource metadata when the application is determined as already installed at the user terminal (Step 525). The place resource servicing application 107c, in response to the determination that the application is not yet installed at the user terminal, further receives an application identifier of the application and a link to a store carrying the application. The place resource servicing application 107c determines to transmit the application identifier and the link to the store to the user terminal.

In another embodiment, the place resource servicing application 107c of the place registry 201 performs a process for removing place data from a collaborative registry. The place resource servicing application 107c, in response to a notification of removal of the place by a provider from one or more of the resources of by the provider, removes the place from the registered resource metadata corresponding to the one or more of the resources. Alternatively, the place resource servicing application 107c, in response to a notification of removal of the place from all resources of the provider, removes the place from all of the registered resource metadata corresponding to the all resources. In another embodiment, the place resource servicing application 107c, in response to a notification of non-existence of the place, removes one or more references to the place from all of the registered resource metadata.

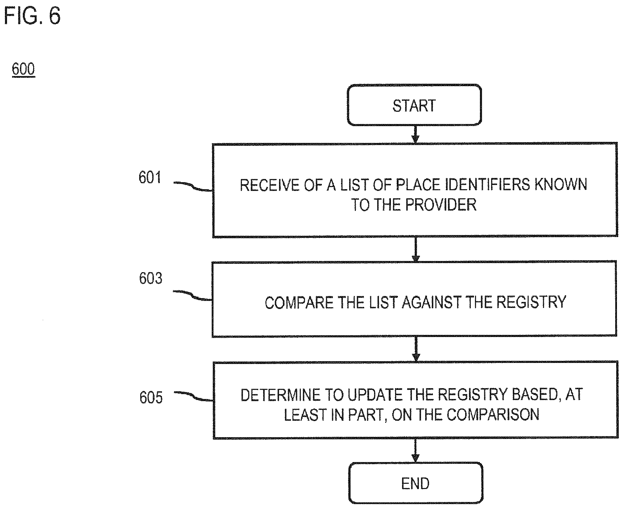

FIG. 6 is a flowchart of a process for updating place data of a web service via a collaborative registry, according to one embodiment. In one embodiment, the place resource servicing application 107c of the place registry 201 performs the process 600 and is implemented in, for instance, a chip set including a processor and a memory as shown in FIG. 11. In step 601, the place resource servicing application 107c receives a list of place identifiers known to the provider. In one embodiment, each of the known places is marked with a marker, for example, prior to processing a new place dump. The markers provide a simple bulk maintenance mechanism for removing all marked places from the collection of known places in the archive. The place resource servicing application 107c compares the list against the registry (Step 603). By way of example, the place resource servicing application 107c matches the identifiers of the known places of the latest backup against identifiers of known places at the place registry. The place resource servicing application 107c determines to update the registry based, at least in part, on the comparison (Step 605). In one embodiment, the place resource servicing application 107c removes the markers from all registered/modified places in all collections of known places. Once all places in the dump are processed, only those places that are still marked are those no longer contained in the latest dump. The place resource servicing application 107c then removes identifiers of the known places of the latest back-up that are still marked with the marker from the list of identifiers of known places of the resource with a single operation.

In some embodiments, resource metadata is transferred from one node to another in one or more HTTP messages. One manner for transporting resource metadata in an HTTP message is to include the resource metadata in an extended markup language (XML) document. XML documents enable values for any of one or more predefined parameters in a dictionary to be exchanged among nodes that have access to that dictionary. XML parameters can be nested and, for any level of nesting, can be listed in any order.

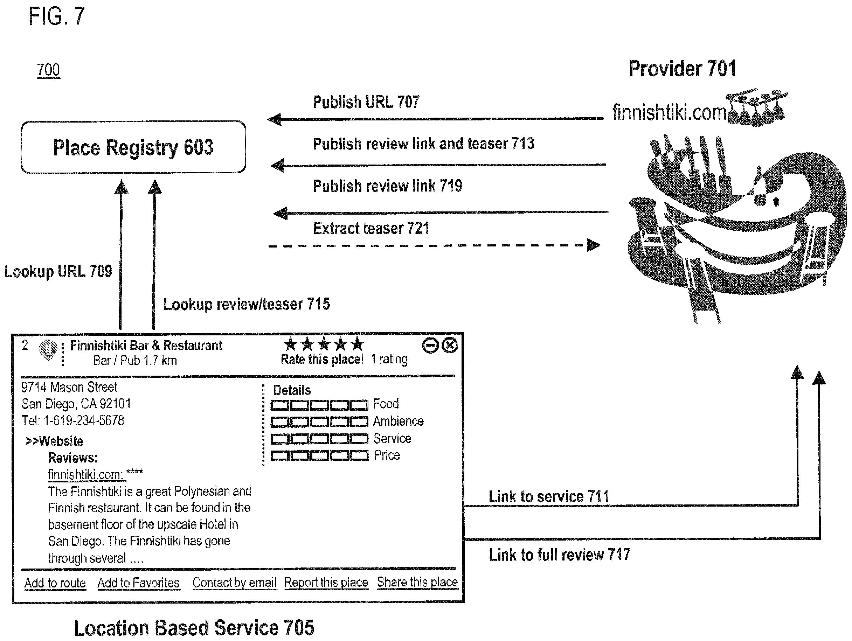

FIG. 7 is diagram 700 of utilizing the place publication processes of FIGs. 4A and 5A, according to one embodiment. In one embodiment, a provider 701 of the place resource service (PRS) can publish an URL (e.g., Finnishtiki.com) of its contents/services together with metadata describing the content (e.g., a name, address, telephone number, etc) at the place registry 703. By way of example, the place is a bar and restaurant name Finnishtiki. The provider 701 may be the owner/manager/webmaster/etc. of Finnishtiki. The provider 701 may be a travel guide service (e.g., Lonely Planet®), a city tourist center, a local chamber of commerce, a motor club and leisure travel organization (e.g., the American Automobile Association), etc.

The URL published in a process 707 can then be used by other users of the place resource service (PRS) 209 to link to their services. The other users may be other providers such as another location-based service 705 (e.g., Ovi Maps). By way of example, the location-based service 705 looks up at the place registry 703 for new places in the San Diego in a process 709, and then receives the URLs and metadata of the new places (including Finnishtiki, its address and phone number) from place registry 703. Based upon the URL, the location-based service 705 links its service to the new place Finnishtiki Bar & Restaurant in a process 711.

The provider 701 can also publish a review link and/or a teaser at the place registry 703 via a process 713, either concurrently with the URL or at a later time. When the location-based service 705 looks up for reviews/teasers of the new places in a process 715, the place registry 703 will send the published review links and/or review teasers of the new places to the location-based service 705. The location-based service 705 then can use the published review links to link its service to a full review of the new place Finnishtiki Bar & Restaurant in a process 717. By way of example, the review may include an overall rating of Finnishtiki as five stars, and detailed ratings of its food, ambience, service, price, etc. The teaser of the review may include that "Finnishtiki is a great Polynesian and Finnish restaurant. It can be found in the basement floor of the upscale Hotel in San Diego. The Finnishtiki has gone through several ...." This teaser content can then be displayed together with the URL. In this embodiment, the Finnishtiki.com and the location-based service 705 are mashed up.

In one embodiment, the place registry 703 uses standardized metadata formats per content types (e.g., reviews, products, jobs, housing, etc.) to control publishing of metadata (e.g., reviews, teaser content, etc.) across multiple services and to facilitate smooth data mash up into a single representation. For example, the standardized metadata formats enable collaborative actions among entities and providers. In another embodiment, the location-based service 705 also combines different data types from multiple sources (e.g., combining Ovi Map and a Wikipedia API).

In another embodiment, the provider 701 publishes a review link (without a teaser) at the place registry 703 via a process 719. However, the metadata standards are embedded in the content sent from the provider 701 to the place registry 703 via the process 719. Based upon the metadata standards, the place registry 703 can extract the review teaser content directly from the website (e.g., Finnishtiki.com) via a process 721. The review teaser becomes available at place registry 703. Thereafter, if the location-based service 705 looks up for reviews/teasers of the new places as in the process 715, the place registry 703 will send the published review links and/or the review teasers of the new places to the location-based service 705. The location-based service 705 then can use the published review links to link its service to a full review of the new place Finnishtiki Bar & Restaurant as in the process 717. In this embodiment, the place registry 703 implicitly combines/mashes up the Finnishtiki.com and the location-based service 705. Since the same metadata mechanisms are also used by search engines, no additional work for the provider to integrate/mash up with the location-based service 705.

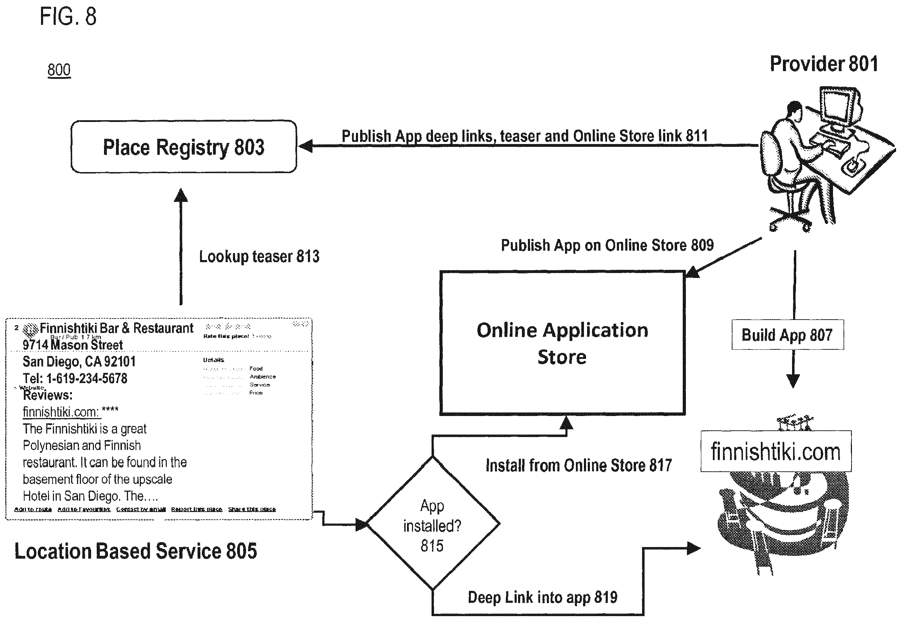

FIG. 8 is diagram 800 of utilizing the application mashing up processes of FIGs. 4B and 5B, according to one embodiment. The above-discussed mashup features are also applicable for location-based service applications that are built by a provider 801 on top of the place registry 803. The provider 801 builds an application (e.g., Finnishtiki) on top of the place registry 803 in a process 807, and then publishes the application at an online application store (e.g., Ovi Store) in a process 809. In addition, the provider 801 publishes application deep links, teaser and a link to the online application store at the place registry 803 in a process 811.

Thereafter, if the location-based service 805 looks up for reviews/teasers of the new places as in a process 813, the place registry 803 will send the published application deep link(s), the review teaser, and the online store link to the location-based service 805. The location-based service 805 then checks if the application is installed locally in a process 815. If not yet, the location-based service 805 uses the online store link to install the application from the online store in a process 817. If the application is installed locally, the location-based service 805 uses the deep links to link to the application in a process 819.

The above-embodiments provide means for a location based application discoverable through the place registry 803 which is the key driver for the web services involving place-related resources 805. Direct links from the place registry 803 into already installed location based applications are important for users of the place registry 803 to discover a new location based application. New places registered from the location based applications increases points of interest coverage of the place registry 803. Establishing the place registry 803 as a hub to the location based applications creates marketing and advertisement opportunities.

In one embodiment, this is applicable the location based applications developed with the SDK as discussed above. Although the location based applications can often use web technologies, they are quite different from regular websites. For example, these location based applications do not use regular hyperlinks for navigation and do not live on the web (only live on devices installed with the applications). The SDK provides a mechanism for "deep links" into a domain of the location based application, and the deep links are used to jump off one stalled location based application to another location based application.

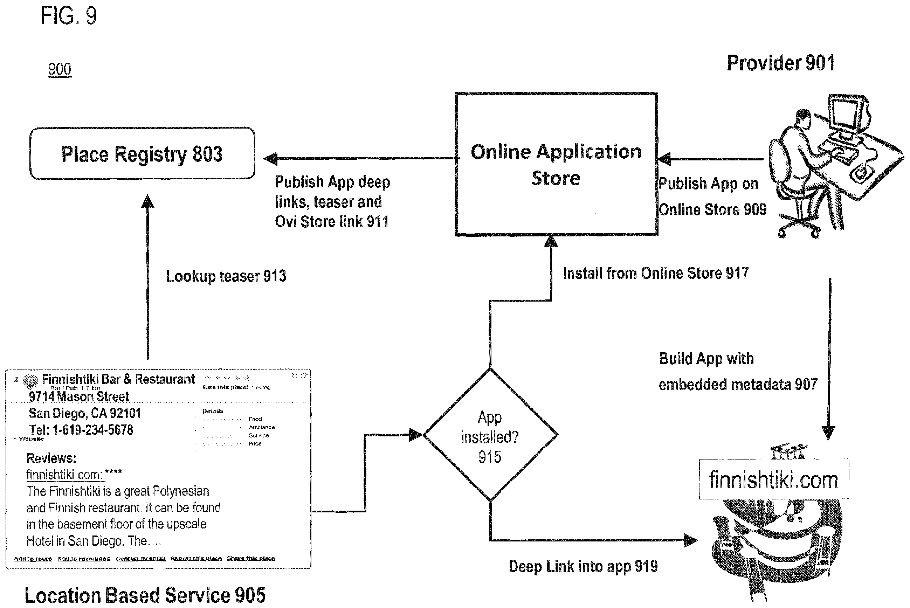

FIG. 9 is diagram 900 of an alternate version of the process of FIG. 8, according to one embodiment. The process depicted in FIG. 8 might be a challenge for less technical providers/publishers. Especially, the integration with the places registry API may be complex. Meanwhile, "long tail" hyper-local providers (e.g., customers with special interests of niche items) are very interested in expanding points of interest coverage and can benefit from "discoverability" offer potentially by the aggregation of place data as described herein.

In the example of FIG. 9, the provider 901 builds an application (e.g., Finnishtiki) with embedded teaser metadata on top of the place registry 903 in a process 907, and then publishes the application at an online application store (e.g., Ovi Store) in a process 909. When the provider 901 publishes an application in the application store, the application store extracts the metadata from the application. All the processes of publishing application deep links, teaser content, and the online store link by interacting with the place registry 703 in FIG. 7 are done between the online store and the place registry 903 in FIG. 9. The online store publishes application deep links, teasers, and online store links at the place registry 903 in a process 911. In one embodiment, development tools provided by the online store can support implicit creation of the metadata, especially creation of places.

Thereafter, if the location-based service 905 looks up for reviews/teasers of the new places as in a process 913, the place registry 903 will send the published application deep link(s), the review teaser, and the online store link of the application to the location-based service 905. The location-based service 905 then checks if the application is installed locally in a process 915. If not yet, the location-based service 905 uses the online store link to install the application from the online store in a process 917. If the application is installed locally, the location-based service 905 uses the deep link(s) to link to the application in a process 919.

The processes described herein for aggregating and linking place data among entities via a collaborative registry may be advantageously implemented via software, hardware, firmware or a combination of software and/or firmware and/or hardware. For example, the processes described herein, including for providing user interface navigation information associated with the availability of services, may be advantageously implemented via processor(s), Digital Signal Processing (DSP) chip, an Application Specific Integrated Circuit (ASIC), Field Programmable Gate Arrays (FPGAs), etc. Such exemplary hardware for performing the described functions is detailed below.

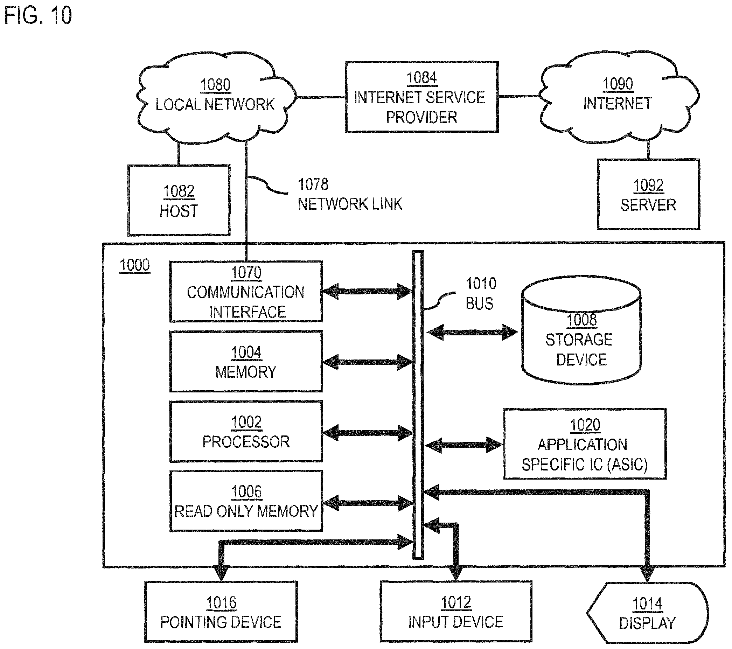

FIG. 10 illustrates a computer system 1000 upon which an embodiment of the invention may be implemented. Although computer system 1000 is depicted with respect to a particular device or equipment, it is contemplated that other devices or equipment (e.g., network elements, servers, etc.) within FIG. 10 can deploy the illustrated hardware and components of system 1000. Computer system 1000 is programmed (e.g., via computer program code or instructions) to aggregate and/or link place data among entities via a collaborative registry as described herein and includes a communication mechanism such as a bus 1010 for passing information between other internal and external components of the computer system 1000. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range. Computer system 1000, or a portion thereof, constitutes a means for performing one or more steps of aggregating and linking place data among entities via a collaborative registry.

A bus 1010 includes one or more parallel conductors of information so that information is transferred quickly among devices coupled to the bus 1010. One or more processors 1002 for processing information are coupled with the bus 1010.

A processor (or multiple processors) 1002 performs a set of operations on information as specified by computer program code related to aggregate and/or link place data among entities via a collaborative registry. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 1010 and placing information on the bus 1010. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 1002, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1000 also includes a memory 1004 coupled to bus 1010. The memory 1004, such as a random access memory (RAM) or other dynamic storage device, stores information including processor instructions for aggregating and linking place data among entities via a collaborative registry. Dynamic memory enables information stored therein to be changed by the computer system 1000. RAM enables a unit of information stored at a location called a memory address to be stored and retrieved independently of information at neighboring addresses. The memory 1004 is also used by the processor 1002 to store temporary values during execution of processor instructions. The computer system 1000 also includes a read only memory (ROM) 1006 or other static storage device coupled to the bus 1010 for storing static information, including instructions, that is not changed by the computer system 1000. Some memory is composed of volatile storage that loses the information stored thereon when power is lost. Also coupled to bus 1010 is a non-volatile (persistent) storage device 1008, such as a magnetic disk, optical disk or flash card, for storing information, including instructions, that persists even when the computer system 1000 is turned off or otherwise loses power.

Information, including instructions for aggregating and linking place data among entities via a collaborative registry, is provided to the bus 1010 for use by the processor from an external input device 1012, such as a keyboard containing alphanumeric keys operated by a human user, or a sensor. A sensor detects conditions in its vicinity and transforms those detections into physical expression compatible with the measurable phenomenon used to represent information in computer system 1000. Other external devices coupled to bus 1010, used primarily for interacting with humans, include a display device 1014, such as a cathode ray tube (CRT) or a liquid crystal display (LCD), or plasma screen or printer for presenting text or images, and a pointing device 1016, such as a mouse or a trackball or cursor direction keys, or motion sensor, for controlling a position of a small cursor image presented on the display 1014 and issuing commands associated with graphical elements presented on the display 1014. In some embodiments, for example, in embodiments in which the computer system 1000 performs all functions automatically without human input, one or more of external input device 1012, display device 1014 and pointing device 1016 is omitted.

In the illustrated embodiment, special purpose hardware, such as an application specific integrated circuit (ASIC) 1020, is coupled to bus 1010. The special purpose hardware is configured to perform operations not performed by processor 1002 quickly enough for special purposes. Examples of application specific ICs include graphics accelerator cards for generating images for display 1014, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1000 also includes one or more instances of a communications interface 1070 coupled to bus 1010. Communication interface 1070 provides a one-way or two-way communication coupling to a variety of external devices that operate with their own processors, such as printers, scanners and external disks. In general the coupling is with a network link 1078 that is connected to a local network 1080 to which a variety of external devices with their own processors are connected. For example, communication interface 1070 may be a parallel port or a serial port or a universal serial bus (USB) port on a personal computer. In some embodiments, communications interface 1070 is an integrated services digital network (ISDN) card or a digital subscriber line (DSL) card or a telephone modem that provides an information communication connection to a corresponding type of telephone line. In some embodiments, a communication interface 1070 is a cable modem that converts signals on bus 1010 into signals for a communication connection over a coaxial cable or into optical signals for a communication connection over a fiber optic cable. As another example, communications interface 1070 may be a local area network (LAN) card to provide a data communication connection to a compatible LAN, such as Ethernet. Wireless links may also be implemented. For wireless links, the communications interface 1070 sends or receives or both sends and receives electrical, acoustic or electromagnetic signals, including infrared and optical signals, that carry information streams, such as digital data. For example, in wireless handheld devices, such as mobile telephones like cell phones, the communications interface 1070 includes a radio band electromagnetic transmitter and receiver called a radio transceiver. In certain embodiments, the communications interface 1070 enables connection to the UE 101A via the communication network 105 for aggregating and linking place data among entities via a collaborative registry.

The term "computer-readable medium" as used herein refers to any medium that participates in providing information to processor 1002, including instructions for execution. Such a medium may take many forms, including, but not limited to computer-readable storage medium (e.g., non-volatile media, volatile media), and transmission media. Non-transitory media, such as non-volatile media, include, for example, optical or magnetic disks, such as storage device 1008. Volatile media include, for example, dynamic memory 1004. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 1020.

Network link 1078 typically provides information communication using transmission media through one or more networks to other devices that use or process the information. For example, network link 1078 may provide a connection through local network 1080 to a host computer 1082 or to equipment 1084 operated by an Internet Service Provider (ISP). ISP equipment 1084 in turn provides data communication services through the public, world-wide packet-switching communication network of networks now commonly referred to as the Internet 1090.

A computer called a server host 1092 connected to the Internet hosts a process that provides a service in response to information received over the Internet. For example, server host 1092 hosts a process that provides information representing video data for presentation at display 1014. It is contemplated that the components of system 1000 can be deployed in various configurations within other computer systems, e.g., host 1082 and server 1092.

At least some embodiments of the invention are related to the use of computer system 1000 for implementing some or all of the techniques described herein. According to one embodiment of the invention, those techniques are performed by computer system 1000 in response to processor 1002 executing one or more sequences of one or more processor instructions contained in memory 1004. Such instructions, also called computer instructions, software and program code, may be read into memory 1004 from another computer-readable medium such as storage device 1008 or network link 1078. Execution of the sequences of instructions contained in memory 1004 causes processor 1002 to perform one or more of the method steps described herein. In alternative embodiments, hardware, such as ASIC 1020, may be used in place of or in combination with software to implement the invention. Thus, embodiments of the invention are not limited to any specific combination of hardware and software, unless otherwise explicitly stated herein.

The signals transmitted over network link 1078 and other networks through communications interface 1070, carry information to and from computer system 1000. Computer system 1000 can send and receive information, including program code, through the networks 1080, 1090 among others, through network link 1078 and communications interface 1070. In an example using the Internet 1090, a server host 1092 transmits program code for a particular application, requested by a message sent from computer 1000, through Internet 1090, ISP equipment 1084, local network 1080 and communications interface 1070. The received code may be executed by processor 1002 as it is received, or may be stored in memory 1004 or in storage device 1008 or other non-volatile storage for later execution, or both. In this manner, computer system 1000 may obtain application program code in the form of signals on a carrier wave.

Various forms of computer readable media may be involved in carrying one or more sequence of instructions or data or both to processor 1002 for execution. For example, instructions and data may initially be carried on a magnetic disk of a remote computer such as host 1082. The remote computer loads the instructions and data into its dynamic memory and sends the instructions and data over a telephone line using a modem. A modem local to the computer system 1000 receives the instructions and data on a telephone line and uses an infra-red transmitter to convert the instructions and data to a signal on an infra-red carrier wave serving as the network link 1078. An infrared detector serving as communications interface 1070 receives the instructions and data carried in the infrared signal and places information representing the instructions and data onto bus 1010. Bus 1010 carries the information to memory 1004 from which processor 1002 retrieves and executes the instructions using some of the data sent with the instructions. The instructions and data received in memory 1004 may optionally be stored on storage device 1008, either before or after execution by the processor 1002.

FIG. 11 illustrates a chip set or chip 1100 upon which an embodiment of the invention may be implemented. Chip set 1100 is programmed to aggregate and/or link place data among entities via a collaborative registry as described herein and includes, for instance, the processor and memory components described with respect to FIG. 10 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set 1100 can be implemented in a single chip. It is further contemplated that in certain embodiments the chip set or chip 1100 can be implemented as a single "system on a chip." It is further contemplated that in certain embodiments a separate ASIC would not be used, for example, and that all relevant functions as disclosed herein would be performed by a processor or processors. Chip set or chip 1100, or a portion thereof, constitutes a means for performing one or more steps of providing user interface navigation information associated with the availability of services. Chip set or chip 1100, or a portion thereof, constitutes a means for performing one or more steps of aggregating and linking place data among entities via a collaborative registry.

In one embodiment, the chip set or chip 1100 includes a communication mechanism such as a bus 1101 for passing information among the components of the chip set 1100. A processor 1103 has connectivity to the bus 1101 to execute instructions and process information stored in, for example, a memory 1105. The processor 1103 may include one or more processing cores with each core configured to perform independently. A multi-core processor enables multiprocessing within a single physical package. Examples of a multi-core processor include two, four, eight, or greater numbers of processing cores. Alternatively or in addition, the processor 1103 may include one or more microprocessors configured in tandem via the bus 1101 to enable independent execution of instructions, pipelining, and multithreading. The processor 1103 may also be accompanied with one or more specialized components to perform certain processing functions and tasks such as one or more digital signal processors (DSP) 1107, or one or more application-specific integrated circuits (ASIC) 1109. A DSP 1107 typically is configured to process real-world signals (e.g., sound) in real time independently of the processor 1103. Similarly, an ASIC 1109 can be configured to performed specialized functions not easily performed by a more general purpose processor. Other specialized components to aid in performing the inventive functions described herein may include one or more field programmable gate arrays (FPGA) (not shown), one or more controllers (not shown), or one or more other special-purpose computer chips.

In one embodiment, the chip set or chip 1100 includes merely one or more processors and some software and/or firmware supporting and/or relating to and/or for the one or more processors.

The processor 1103 and accompanying components have connectivity to the memory 1105 via the bus 1101. The memory 1105 includes both dynamic memory (e.g., RAM, magnetic disk, writable optical disk, etc.) and static memory (e.g., ROM, CD-ROM, etc.) for storing executable instructions that when executed perform the inventive steps described herein to aggregate and/or link place data among entities via a collaborative registry. The memory 1105 also stores the data associated with or generated by the execution of the inventive steps.

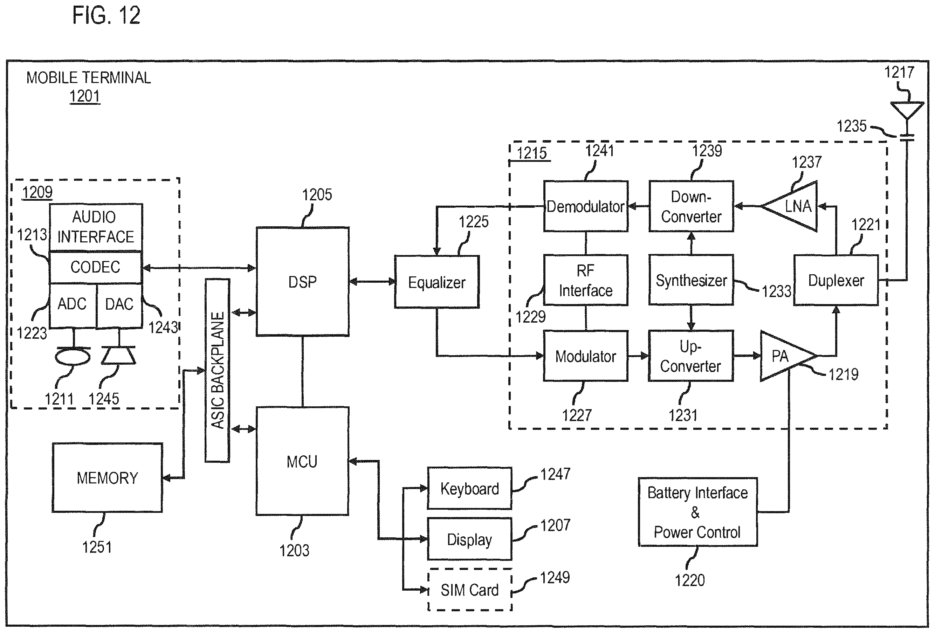

FIG. 12 is a diagram of exemplary components of a mobile terminal (e.g., handset) for communications, which is capable of operating in the system of FIG. 1, according to one embodiment. In some embodiments, mobile terminal 1200, or a portion thereof, constitutes a means for performing one or more steps of aggregating and linking place data among entities via a collaborative registry. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 1203, a Digital Signal Processor (DSP) 1205, and a receiver/transmitter unit including a microphone gain control unit and a speaker gain control unit. A main display unit 1207 provides a display to the user in support of various applications and mobile terminal functions that perform or support the steps of aggregating and linking place data among entities via a collaborative registry. The display 12 includes display circuitry configured to display at least a portion of a user interface of the mobile terminal (e.g., mobile telephone). Additionally, the display 1207 and display circuitry are configured to facilitate user control of at least some functions of the mobile terminal. An audio function circuitry 1209 includes a microphone 1211 and microphone amplifier that amplifies the speech signal output from the microphone 1211. The amplified speech signal output from the microphone 1211 is fed to a coder/decoder (CODEC) 1213.

A radio section 1215 amplifies power and converts frequency in order to communicate with a base station, which is included in a mobile communication system, via antenna 1217. The power amplifier (PA) 1219 and the transmitter/modulation circuitry are operationally responsive to the MCU 1203, with an output from the PA 1219 coupled to the duplexer 1221 or circulator or antenna switch, as known in the art. The PA 1219 also couples to a battery interface and power control unit 1220.

In use, a user of mobile terminal 1201 speaks into the microphone 1211 and his or her voice along with any detected background noise is converted into an analog voltage. The analog voltage is then converted into a digital signal through the Analog to Digital Converter (ADC) 1223. The control unit 1203 routes the digital signal into the DSP 1205 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like.

The encoded signals are then routed to an equalizer 1225 for compensation of any frequency-dependent impairments that occur during transmission though the air such as phase and amplitude distortion. After equalizing the bit stream, the modulator 1227 combines the signal with a RF signal generated in the RF interface 1229. The modulator 1227 generates a sine wave by way of frequency or phase modulation. In order to prepare the signal for transmission, an up-converter 1231 combines the sine wave output from the modulator 1227 with another sine wave generated by a synthesizer 1233 to achieve the desired frequency of transmission. The signal is then sent through a PA 1219 to increase the signal to an appropriate power level. In practical systems, the PA 1219 acts as a variable gain amplifier whose gain is controlled by the DSP 1205 from information received from a network base station. The signal is then filtered within the duplexer 1221 and optionally sent to an antenna coupler 1235 to match impedances to provide maximum power transfer. Finally, the signal is transmitted via antenna 1217 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile terminal 1201 are received via antenna 1217 and immediately amplified by a low noise amplifier (LNA) 1237. A down-converter 1239 lowers the carrier frequency while the demodulator 1241 strips away the RF leaving only a digital bit stream. The signal then goes through the equalizer 1225 and is processed by the DSP 1205. A Digital to Analog Converter (DAC) 1243 converts the signal and the resulting output is transmitted to the user through the speaker 1245, all under control of a Main Control Unit (MCU) 1203-which can be implemented as a Central Processing Unit (CPU) (not shown).

The MCU 1203 receives various signals including input signals from the keyboard 1247. The keyboard 1247 and/or the MCU 1203 in combination with other user input components (e.g., the microphone 1211) comprise a user interface circuitry for managing user input. The MCU 1203 runs a user interface software to facilitate user control of at least some functions of the mobile terminal 1201 to aggregate and/or link place data among entities via a collaborative registry. The MCU 1203 also delivers a display command and a switch command to the display 1207 and to the speech output switching controller, respectively. Further, the MCU 1203 exchanges information with the DSP 1205 and can access an optionally incorporated SIM card 1249 and a memory 1251. In addition, the MCU 1203 executes various control functions required of the terminal. The DSP 1205 may, depending upon the implementation, perform any of a variety of conventional digital processing functions on the voice signals. Additionally, DSP 1205 determines the background noise level of the local environment from the signals detected by microphone 1211 and sets the gain of microphone 1211 to a level selected to compensate for the natural tendency of the user of the mobile terminal 1201.

The CODEC 1213 includes the ADC 1223 and DAC 1243. The memory 1251 stores various data including call incoming tone data and is capable of storing other data including music data received via, e.g., the global Internet. The software module could reside in RAM memory, flash memory, registers, or any other form of writable storage medium known in the art. The memory device 1251 may be, but not limited to, a single memory, CD, DVD, ROM, RAM, EEPROM, optical storage, or any other non-volatile storage medium capable of storing digital data.

An optionally incorporated SIM card 1249 carries, for instance, important information, such as the cellular phone number, the carrier supplying service, subscription details, and security information. The SIM card 1249 serves primarily to identify the mobile terminal 1201 on a radio network. The card 1249 also contains a memory for storing a personal telephone number registry, text messages, and user specific mobile terminal settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

The following numbered paragraph are also disclosal.
1. A method comprising facilitating access to at least one interface to allow access to at least one service, the service configured to at least perform the following:
   receiving an input from a provider for specifying place information, the place information including, at least in part, a description of content available from the provider related to a place at a geographic location;
   determining the place from the place information; and
   aggregating the place information with other place information available from one or more other providers in a registry based, at least in part, on the determined place.
2. A method of paragraph 1, wherein the place information further includes a place identifier associated with the place, and wherein the determining of the place is based, at least in part, on the place identifier.
3. A method of paragraph 2, wherein the description of the content is provided in the registry according to one or more standardized metadata formats, and wherein the service is further configured to perform:
   determining to publish the registry.
4. A method of paragraph 3, wherein the service is further configured to perform:
   determining to obtain a subscription to all or a portion of the registry; and
   receiving one or more updates to the registry based, at least in part, on the subscription.
5. A method of paragraph 4, wherein at least one of the publication and the subscription are transmitted via one or more web feeds.
6. A method of paragraph 4, wherein the content metadata is associated with a uniform resource identifier pointing to the content.
7. A method of paragraph 1, wherein the service is further configured to perform:
   determining one or more resources for obtaining all or a portion of the content;
   determining to extract all or a portion of the description of the content from the one or more resources according to one or more standardized metadata formats; and
   determining to publish the registry.
8. A method of paragraph 1, wherein the description of the content identifies, at least in part, one or more related applications, services, resources, or a combination thereof.
9. A method of paragraph 1, wherein the service is further configured to perform:
   determining to remove the place information from the registry based, at least in part, on at least one of a request to remove the place information, a notification that the place has been removed at the provider's service, and a determination of non-existence of the place.
10. A method of paragraph 1, wherein the service is further configured to perform:
   receiving a list of place identifiers known to the provider;
   comparing the list against the registry; and
   determining to update the registry based, at least in part, on the comparison.
11. An apparatus comprising:
   at least one processor; and
   at least one memory including computer program code for one or more programs,
   the at least one memory and the computer program code configured to, with the at least one processor, cause the apparatus to perform at least the following,
      receive an input from a provider for specifying place information, the place information including, at least in part, a description of content available from the provider related to a place at a geographic location;
      determine the place from the place information; and
      aggregate the place information with other place information available from one or more other providers in a registry based, at least in part, on the determined place.
12. An apparatus of paragraph 11, wherein the place information further includes a place identifier associated with the place, and wherein the determining of the place is based, at least in part, on the place identifier.
13. An apparatus of paragraph 12, wherein the description of the content is provided in the registry according to one or more standardized metadata formats, and wherein the apparatus is further caused to:
   determine to publish the registry.
14. An apparatus of paragraph 13, wherein the apparatus is further caused to:
   determine to obtain a subscription to all or a portion of the registry; and
   receive one or more updates to the registry based, at least in part, on the subscription.
15. An apparatus of paragraph 14, wherein at least one of the publication and the subscription are transmitted via one or more web feeds.
16. An apparatus of paragraph 14, wherein the content metadata is associated with a uniform resource identifier pointing to the content.
17. An apparatus of paragraph 11, wherein the apparatus is further caused to:
   determine one or more resources for obtaining all or a portion of the content;
   determine to extract all or a portion of the description of the content from the one or more resources according to one or more standardized metadata formats; and
   determine to publish the registry.
18. A computer-readable storage medium carrying one or more sequences of one or more instructions which, when executed by one or more processors, cause an apparatus to at least perform the following steps:
   receiving an input from a provider for specifying place information, the place information including, at least in part, a description of content available from the provider related to a place at a geographic location;
   determining the place from the place information; and
   aggregating the place information with other place information available from one or more other providers in a registry based, at least in part, on the determined place.
19. A computer-readable storage medium of paragraph 18, wherein the place information further includes a place identifier associated with the place, and wherein the determining of the place is based, at least in part, on the place identifier.
20. A computer-readable storage medium of paragraph 19, wherein the description of the content is provided in the registry according to one or more standardized metadata formats, and wherein the apparatus is caused to further perform:
   determining to publish the registry.
21. A method comprising:
   receiving an input from a provider for specifying place information, the place information including, at least in part, a description of content available from the provider related to a place at a geographic location;
   determining the place from the place information; and
   aggregating the place information with other place information available from one or more other providers in a registry based, at least in part, on the determined place.
22. A method of paragraph 21, wherein the place information further includes a place identifier associated with the place, and wherein the determining of the place is based, at least in part, on the place identifier.
23. A method of paragraph 22, wherein the description of the content is provided in the registry according to one or more standardized metadata formats, further comprising:
   determining to publish the registry.
24. A method of paragraph 23, further comprising:
   determining to obtain a subscription to all or a portion of the registry; and
   receiving one or more updates to the registry based, at least in part, on the subscription.
25. A method of paragraph 24, wherein at least one of the publication and the subscription are transmitted via one or more web feeds.
26. A method of paragraph 24, wherein the content metadata is associated with a uniform resource identifier pointing to the content.
27. A method according to any one of paragraphs 21-26, further comprising:
   determining one or more resources for obtaining all or a portion of the content;
   determining to extract all or a portion of the description of the content from the one or more resources according to one or more standardized metadata formats; and
   determining to publish the registry.
28. A method according to any one of paragraphs 21-27, wherein the description of the content identifies, at least in part, one or more related applications, services, resources, or a combination thereof.
29. A method according to any one of paragraphs 21-28, further comprising:
   determining to remove the place information from the registry based, at least in part, on at least one of a request to remove the place information, a notification that the place has been removed at the provider's service, and a determination of non-existence of the place.
30. A method according to any one of paragraphs 21-29, further comprising:
   receiving a list of place identifiers known to the provider;
   comparing the list against the registry; and
   determining to update the registry based, at least in part, on the comparison.
31. An apparatus comprising:
   at least one processor; and
   at least one memory including computer program code for one or more programs,
   the at least one memory and the computer program code configured to, with the at least one processor, cause the apparatus to perform at least the following,
      receive an input from a provider for specifying place information, the place information including, at least in part, a description of content available from the provider related to a place at a geographic location;
      determine the place from the place information; and
      aggregate the place information with other place information available from one or more other providers in a registry based, at least in part, on the determined place.
32. An apparatus of paragraph 31, wherein the place information further includes a place identifier associated with the place, and wherein the determining of the place is based, at least in part, on the place identifier.
33. An apparatus of paragraph 32, wherein the description of the content is provided in the registry according to one or more standardized metadata formats, and wherein the apparatus is further caused to:
   determine to publish the registry.
34. An apparatus of paragraph 33, wherein the apparatus is further caused to:
   determine to obtain a subscription to all or a portion of the registry; and
   receive one or more updates to the registry based, at least in part, on the subscription.
35. An apparatus of paragraph 34, wherein at least one of the publication and the subscription are transmitted via one or more web feeds.
36. An apparatus of paragraph 34, wherein the content metadata is associated with a uniform resource identifier pointing to the content.
37. An apparatus according to any one of paragraphs 31-36, wherein the apparatus is further caused to:
   determine one or more resources for obtaining all or a portion of the content;
   determine to extract all or a portion of the description of the content from the one or more resources according to one or more standardized metadata formats; and
   determine to publish the registry.
38. An apparatus according to any one of paragraphs 31-37, wherein the description of the content identifies, at least in part, one or more related applications, services, resources, or a combination thereof.
39. An apparatus according to any one of paragraphs 31-38, wherein the apparatus is further caused to:
   determine to remove the place information from the registry based, at least in part, on at least one of a request to remove the place information, a notification that the place has been removed at the provider's service, and a determination of non-existence of the place.
40. An apparatus according to any one of paragraphs 31-39, wherein the apparatus is further caused to:
   receive a list of place identifiers known to the provider;
   compare the list against the registry; and
   determine to update the registry based, at least in part, on the comparison.
41. An apparatus of paragraph 40, wherein the apparatus is a mobile phone further comprising:
   user interface circuitry and user interface software configured to facilitate user control of at least some functions of the mobile phone through use of a display and configured to respond to user input; and
   a display and display circuitry configured to display at least a portion of a user interface of the mobile phone, the display and display circuitry configured to facilitate user control of at least some functions of the mobile phone.
42. A computer-readable storage medium carrying one or more sequences of one or more instructions which, when executed by one or more processors, cause an apparatus to perform at least a method of any one of paragraphs 21-30.
43. An apparatus comprising means for performing a method of any one of paragraphs 21-30.
44. An apparatus of paragraph 43, wherein the apparatus is a mobile phone further comprising:
   user interface circuitry and user interface software configured to facilitate user control of at least some functions of the mobile phone through use of a display and configured to respond to user input; and
   a display and display circuitry configured to display at least a portion of a user interface of the mobile phone, the display and display circuitry configured to facilitate user control of at least some functions of the mobile phone.
45. A computer program product including one or more sequences of one or more instructions which, when executed by one or more processors, cause an apparatus to at least perform the steps of a method of any one of paragraphs 21-30.
46. A method comprising facilitating access to at least one interface configured to allow access to at least one service, the at least one service configured to perform a method of any one of paragraphs 21-30.

## Claims

1. A computer-implemented method comprising:
receiving an input from a provider for specifying place information, the place information including a description of content available from the provider related to a place at a geographic location, the description of content comprising content metadata;
determining the place from the place information;
aggregating the place information with other place information available from one or more other providers in a registry based on a globally unique place identifier of the determined place;
determining one or more resources for obtaining all or a portion of the content metadata;
extracting all or a portion of the description of the content from the one or more resources according to one or more standardized metadata formats;
publishing an aggregate description of the content according to the one or more standardized metadata formats based on the extracted all or portion of the description of the content and the registry.

2. The method of claim 1, wherein the determining the place from the place information is based on the place information comprising a place identifier of the place.

3. The method of claim 1 or claim 2, wherein the globally unique place identifier enables aggregating the place information with the other place information without confusion with a different place referred by a different provider.

4. The method of any preceding claim, wherein the aggregation of the place information with the other place information is based on the determined place.

5. The method of any preceding claim, further comprising:
obtaining a subscription for updates to the place information; and
receiving one or more updates to the place information based on the subscription.

6. The method of claim 5, wherein the subscription is defined with one or more place identifiers.

7. The method of claim 6, wherein the subscription comprises content metadata corresponding to the one or more place identifiers.

8. The method of claim 7, wherein the content metadata corresponding to the one or more place identifiers is standardised in one or more formats.

9. The method of claim 7 or 8, wherein the content metadata corresponding to the one or more place identifiers comprises a content identifier associated with a uniform resource locator configured to enable the one or more other providers to link one or more resources, applications, or a combination thereof to the content.

10. The method of any of claims 5 to 9, wherein the publication and the subscription are transmitted as web feeds.

11. The method of any preceding claim, wherein the one or more resources comprise one or more of: a photo, a media file, a website and a database.

12. The method of any preceding claim, wherein each of the one or more resources is identified by one or more resource identifiers and is related to the place at the geographic location.

13. The method of any preceding claim, further comprising:
removing the publication of the aggregate description of the content in response to one or more of:
notification of removal of the place by the provider from one or more of the resources of the provider;
notification of removal of the place from all resources of the provider; and
notification of non-existence of the place.

14. An apparatus comprising:
at least one processor, and at least one memory including computer program code, the at least one memory and the computer program code configured to, with the at least one processor, cause the apparatus to perform the method of any preceding claim.

15. A computer readable storage medium carrying one or more sequences of one or more instructions which, when executed by one or more processors, cause the apparatus of claim 14 to perform the method of any of claims 1 to 13.
